# EUROPÄISCHE PATENTSCHRIFT

(11) **EP 1 183 443 B1**
(45) Veröffentlichungstag und Bekanntmachung des Hinweises auf die Patenterteilung: **16.03.2005**
(21) Anmeldenummer: 00927219.6
(22) Anmeldetag: 19.05.2000
(51) Int. Cl.: F01D 11/00, F01D 11/04, E04H 12/08

(54) **VERSTEIFUNGSRING FÜR DEN TURM EINER WINDENERGIEANLAGE**
REINFORCEMENT RING FOR THE TOWER OF A WIND ENERGY FACILITY
ANNEAU DE RENFORCEMENT POUR LA TOUR D'UNE CENTRALE EOLIENNE

(30) Priorität: 20.05.1999 DE 19923165
(43) Veröffentlichungstag der Anmeldung: 06.03.2002
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2000/004527
(87) Internationale Veröffentlichungsnummer: WO 2000/071856

(56) Entgegenhaltungen:
- EP-A- 0 821 161
- WO-A-82/04466
- DE-A- 3 718 436
- DE-A- 19 621 514
- DATABASE WPI Section PQ, Week 198248 Derwent Publications Ltd., London, GB; Class Q46, AN 1982-A5111J XP002144363 -& SU 898 027 A (KAZA METAL CONS CON), 15. Januar 1982 (1982-01-15)
- PATENT ABSTRACTS OF JAPAN vol. 018, no. 143 (M-1574), 9. März 1994 (1994-03-09) -& JP 05 321482 A (OHBAYASHI CORP), 7. Dezember 1993 (1993-12-07)
- HAU, ERICH: "Windkraftanlagen" , SPRINGER VERLAG , BERLIN XP002144362 Seite 374 -Seite 391 Abbildung 12.11

## Beschreibung

Die vorliegende Erfindung betrifft einen Turm einer Windenergieanlage zum Tragen eines Turmkopfes der Windenergieanlage, mit einem Flansch zur Aufnahme einer Verbindung, die geeignet ist, den Turmkopf der Windenergieanlage aufzunehmen.

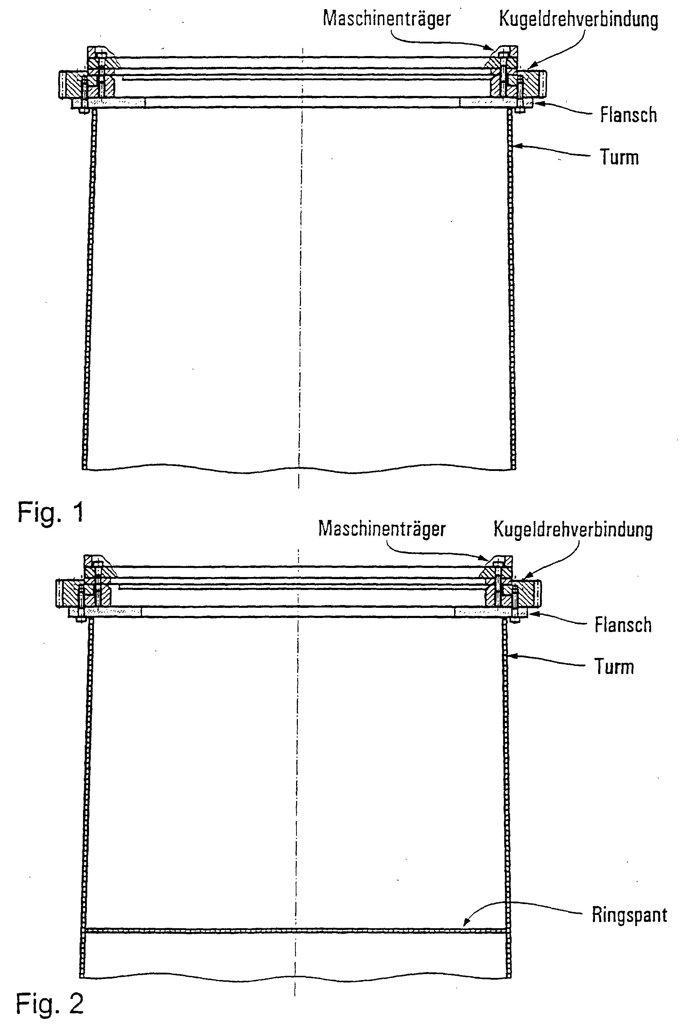

Bei herkömmlichen Windenergieanlagen, in der Größenordnung einer Leistung von 1,0 MW und größer, werden die Türme - regelmäßig handelt es sich hierbei um Stahlrohre - entsprechend groß und schwer. Ein Flansch ist regelmäßig bei den Stahltürmen am Turmende ausgeführt. Dieser Flansch bildet die ebene Azimutfläche des Turmes zur Aufnahme eines Azimutlagers, wobei als Azimutlager vornehmlich Kugeldrehverbindungen, wie sie in der allgemeinen Technik bekannt sind, eingesetzt werden. Dies ist in Figur 1 gezeigt.

Aus ERICH HAU: "Windkraftanlagen" , Springer Verlag, Berlin, 1996, insbesondere Seiten 379 bis 381; ist der Aufbau einer Windenergieanlage bekannt. Dort ist z. B. ein Stahlrohrturm einer großen Windenergieanlage mit ihren Einbauten gezeigt (Seite 381) und ferner ist auf den Seiten 382 ff. die Festigkeits-/Steifigkeitsauslegung der Türme von Windenergieanlagen näher beschrieben.

Aus EP-A-0 821 161 ist eine Windkraftanlage mit einem Turm bekannt.

Aus DATABASE WPI Section PQ, Week 198248 Derwent Publications Ltd., London, GB; Class Q46, AN 1982-A5111J XP002144363-& Su 898 027 A (KAZA METAL CONS CON), 15. Januar 1982, ist die Konstruktion eines aus einem Stahlrohr hergestellten Schornsteins bekannt.

Häufig werden vorgefertigte L-Flansche - direkt am Ende des Turmes angeschweißt. Die L-Flansche werden mit Drehmaschinen so genau bearbeitet, daß das Azimutlager eine ebene Auflagefläche vorfindet. Die Azimutlager bei großen Windenergieanlagen haben einen Durchmesser von ca. 1,8 m bis 4,0 m (oder mehr) und haben in der Regel nur sehr geringe Bauhöhen von ca. 50 mm bis 500 mm, vorzugsweise circa 100 mm bis 200 mm. Daher benötigen diese Lager auf beiden Anschlußseiten (Turm und Turmkopf der Windenergieanlage) eine sehr plane, ebene und steife Anschlußkonstruktion. Auf der Montagestelle (Baustelle) der Windenergieanlage wird dann das Azimutlager, im allgemein also die Kugeldrehverbindung, mit dem Turmkopf verschraubt.

Durch das hohe Eigengewicht des Materials, beispielsweise Stahl, biegt sich der Turm bei der Herstellung und/oder beim anschließenden Transport zur Montagestelle der Windenergieanlage durch. Solche Durchbiegungen lassen sich insbesondere auf unebenen Straßen trotz guter Transportlagerung der Türme oder Turmelemente kaum vermeiden. Eine solche Durchbiegung hat wegen des plastischen Verhaltens von Stahl zur Folge, daß der vorgesehene Kreisdurchmesser des Turmendes und des Turmes insgesamt dazu neigt, sich von der idealen Kreisform in eine Ovalform zu verändern (Walfischeffekt). Liegt die Verbiegung des Turm-Kreisdurchmessers zu einem Oval vor, wird auch der Flansch am Ende des Turmes verbogen. Dabei wird das Azimutlager verspannt und nach einiger Betriebszeit der Windenergieanlage treten Fehler im Azimutlager auf, was sehr störend ist, weil Reparaturen am Azimutlager nur unter sehr großen Kosten und Aufwendungen durchgeführt werden können.

Es ist daher Aufgabe der Erfindung einen Turm einer Windenergieanlage mit einem Flansch zur Aufnahme einer Verbindung bereitzustellen, wobei sich der Turm aufgrund seines Eigengewichts während der Herstellung und/oder des Transport in seinem Querschnitt, insbesondere im Bereich des Flansches, nicht verformt.

Dieses Problem wird durch einen erfindungsgemäßen Turm einer Windenergieanlage zum Tragen eines Turmkopfes der Windenergieanlage gelöst, wobei der Turm einen Flansch zur Aufnahme einer Verbindung aufweist, die geeignet ist, den Turmkopf der Windenergieanlage aufzunehmen, und der Turm dadurch gekennzeichnet ist, daß ein Schott oder ein Ringspant im Turminneren in einem Abstand von vorzugsweise 1,0 m bis 7,0 m vom Flansch vorgesehen ist, und das Schott oder der Ringspant im wesentlichen eine Scheibe bildet, die im Turminneren mit der Turmwandung verbunden ist und den Turm durchsetzt.

Das Schott bzw. Ringspant im Inneren des Turms sorgt dafür, daß der Turm in seinem Durchmesser schlechter verformbar ist. Denn eine Verformung des Turmdurchmessers im Bereich des Schott bzw. Ringspant kann nur dann stattfinden, wenn das Ringspant bzw. Schott zugleich verformt wird. Das Schott bzw. Ringspant befindet sich vorzugsweise in der Nähe des Flansch, erfahrungsgemäß ist ein Abstand von 1,0 m bis 7,0 m vorzuziehen, damit der Turmdurchmessers im Bereich des Flansches stabil ist. Somit ist gewährleistet, daß sich der Flansch während des Transports und/oder der Herstellung des Turms nicht verformt.

Gemäß einer Ausführungsform wird ein Drehlager als Verbindung zwischen dem Turmkopf und dem Turm eingesetzt.

Das Drehlager erlaubt es, den Turmkopf relativ zum Turm zu rotieren. Damit ist es möglich, die auf dem Turmkopf befestigten Rotoren der Windenergieanlage optimal am Wind auszurichten.

Eine vorteilhaft Ausgestaltung der Erfindung wird dadurch erzielt, daß eine Öffnung im Zentrum des Schott oder Ringspant vorgesehen ist.

Durch diese Öffnung können Gegenstände oder Personen beispielsweise mittels eines Aufzugs im Inneren des aufgestellten Turmes befördert werden. Insbesondere bei der Errichtung oder bei Reparaturarbeiten an der Windenergieanlage ist es häufig unerläßlich, daß Monteure bzw. Fachpersonal mit den geeigneten Werkzeugen durch das Innere des Turms bis zu dem Turmende gelangen.

Gemäß einer weiteren vorteilhaften Ausgestaltung der Erfindung ist das Ringspant oder Schott in einem Abstand von 1,5 m bis 3,0 m, vorzugsweise 2,0 m, vom Flansch angeordnet.

Das Schott bzw. der Ringspant hat somit nicht nur den Vorteil, daß er dafür sorgt, daß das Azimutlager eine völlig ebene Auflagefläche erhält, sondern kann auch gleichzeitig als Montageplattform dienen, wenn der Turm der Windenergieanlage nach seiner Errichtung den Turmkopf, d.h. die Gondel, also den Maschinenträger der Windenergieanlage mit dem Generator und dem Rotor, aufnehmen soll. Hierzu ist es notwendig, daß Montagearbeiter von innen am Turmende den Maschinenträger führen und an ihm Arbeiten ausführen. Mit dem erfindungsgemäßen Schott wird den Monteuren eine sichere Arbeitsplattform zur Verfügung gestellt, welche auch bei späteren Arbeiten stets wieder genutzt werden kann, und weiche dann nicht wieder aufgebaut werden muß.

Gemäß einer Weiterbildung der Erfindung werden weitere Ringspants oder Schotts im Inneren des Turms vorgesehen sind, die jeweils im wesentlichen eine Scheibe bilden, die im Turminneren mit der Turmwandung verbunden ist und den Turm durchsetzt.

Mit jedem weiteren Schott bzw. Ringspant wird die Plastizität des Turms im Bereich der zusätzlichen Schotts herabgesetzt. Das Bereitstellen von weitern Schotts bzw. Ringspants im Turminneren hat demnach den Vorteil, daß die ideale Querschnittsform des Turms über weite Bereiche des Turms aufrechterhalten werden kann.

Ein Ausführungsbeispiel der Erfindung ist in der Zeichnung dargestellt und wird im folgenden näher beschrieben.

Es zeigen:
Fig. 1 einen Längsschnitt eines oberen Turmabschnitts gemäß dem Stand der Technik,
Fig. 2 einen Längsschnitt eines oberen Turmabschnitts gemäß dem Ausführungsbeispiel der vorliegenden Erfindung,
Fig. 3, 4 und 5 zeigen die Verformung eines Turms gemäß dem Stand der Technik, und
Fig. 6 bis 11 zeigen die Verformung eines Turms gemäß dem Ausführungsbeispiel der Erfindung.

In dem in Fig. 1 gezeigten Längsschnitt ist ein Turmabschnitt gemäß dem Stand der Technik gezeigt, der einen rohrformigen Turm, einen Flansch, eine Kugeldrehverbindung und einen Maschinentrager umfaßt. Der rohrförmige Turm besitzt einen kreisförmigen Querschnitt. Am oberen Ende des Turms ist der Flansch zur Aufnahme der Kugeldrehverbindung dargestellt. Der Flansch ist eine ringförmige Scheibe, die auf dem Ende des Turms angeschweißt ist, und deren Mittelpunkt auf der Längsachse des rohrförmigen Turms liegt. Der scheibenförmige Flansch ragt über die Turmwandung hinaus. Die Oberseite des Flansches besitzt eine ebene Auflagefläche, auf der die Kugeldrenverbindung aufliegt und an der die Kugeldrehverbindung befestigt ist. Auf der Kugeldrehverbindung ist der Maschinenträger um die Längsachse des Turms drehbar gelagert.

Der in Fig. 2 gezeigte erfindungsgemaße Turmabschnitt besitzt ebenfalls einen Flansch, eine Kugeldrehverbindung und einen Maschinenträger. Die Anordnung dieser Elemente entspricht der in Fig. 1 gezeigten Anordnung gemäß dem Stand der Technik. Der obere Turmabschnitt besteht aus einem Azimutflansch und einem Stück Turm von einer Länge von circa 3,0 m bis 10,0 m, vorzugsweise 3,0 m bis 4,0 m. Dieser Turmabschnitt besitzt in einem Abstand von circa 1,50 m bis 3,0 m, vorzugsweise von circa 2,0 m vom Azimutflansch einen zusätzlichen Ringspant bzw. ein Schott. Hierbei handelt es sich um eine kreisrunde Scheibe aus Stahl, die von innen in die Turmsektion eingeschweißt ist und das Turminnere in zwei Bereiche aufteilt. Hiernach wird die Turmsektioneinheit mechanisch am Flansch bearbeitet. Damit ist sichergestellt, daß das Azimutlager stets eine ebene Auflagefläche erhält.

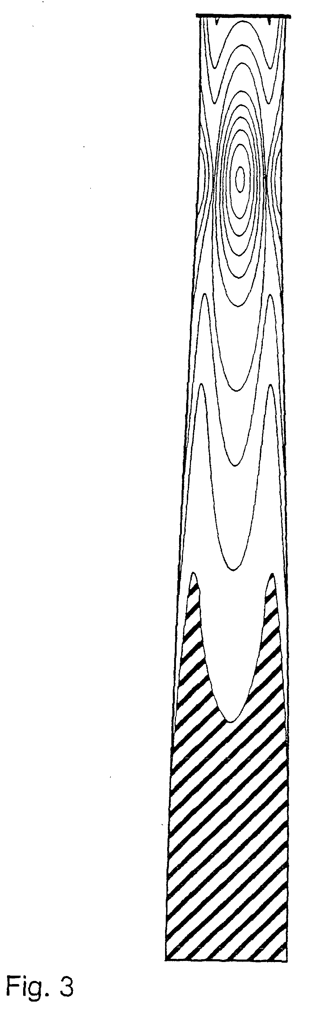

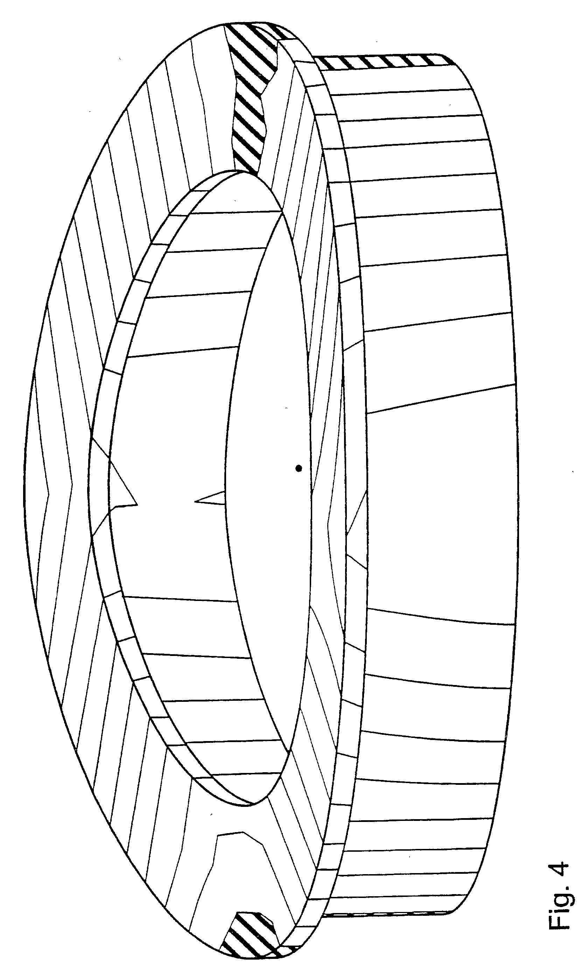

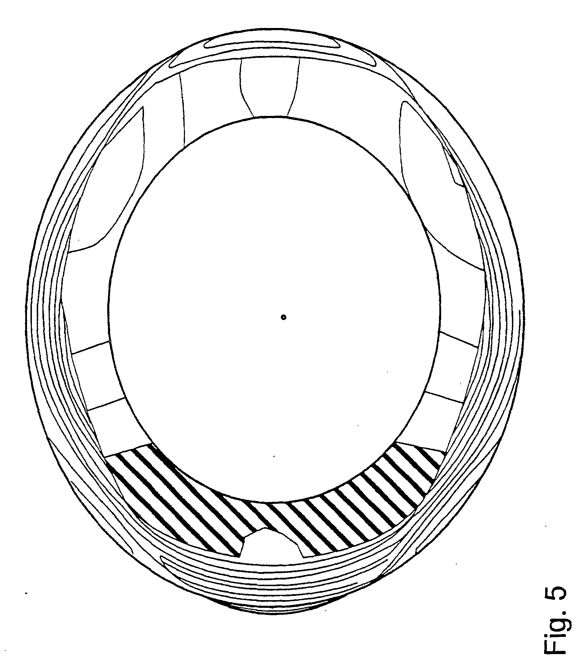

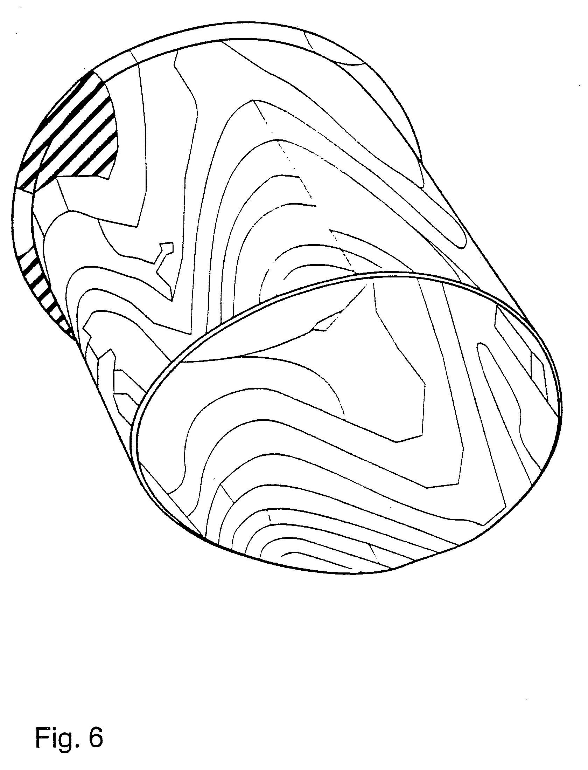

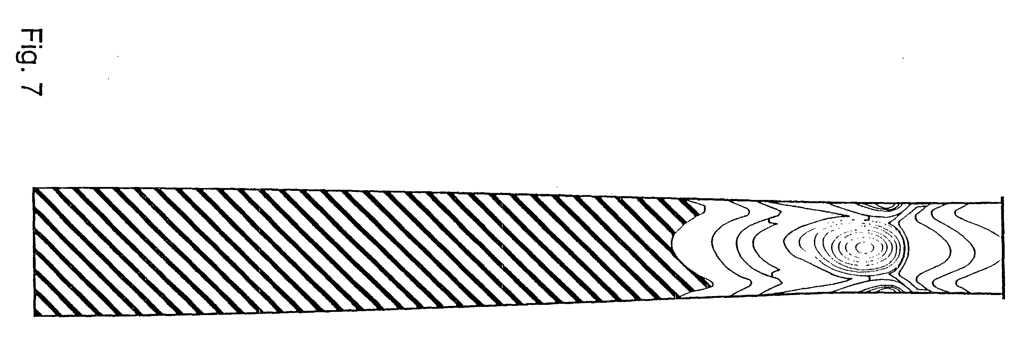

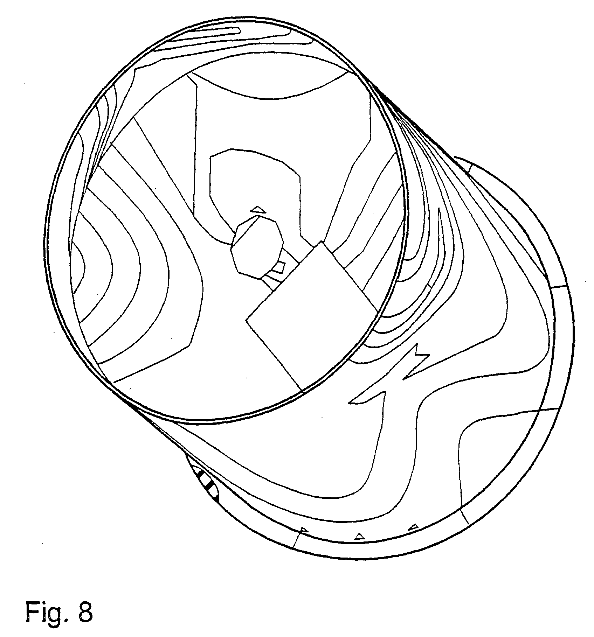

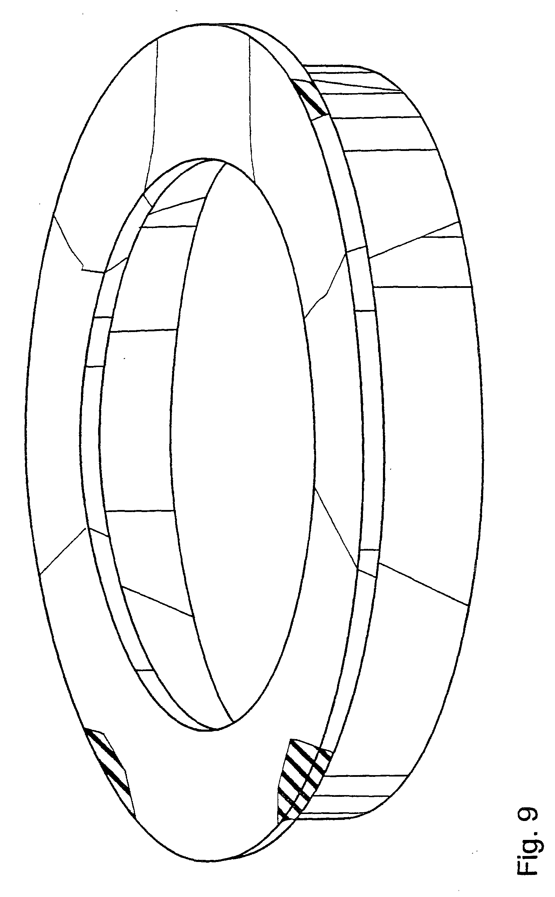

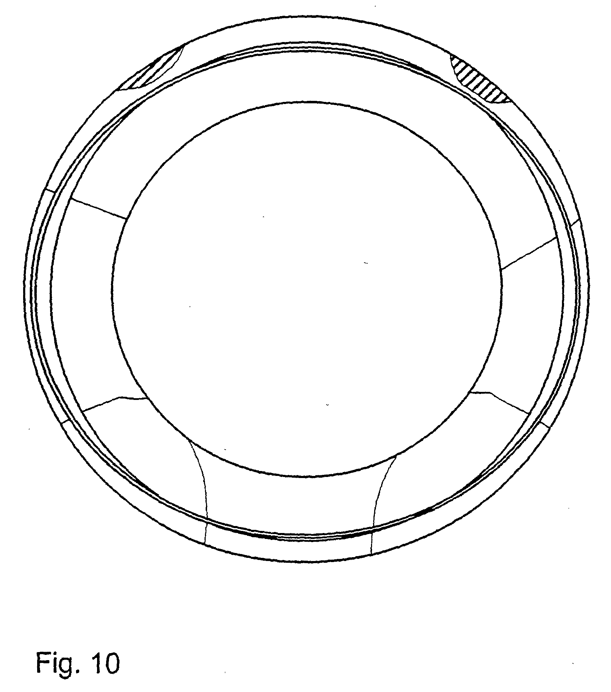

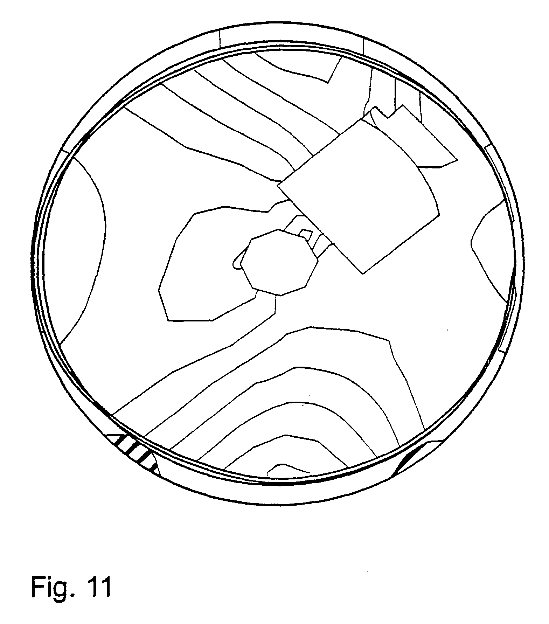

Der in den Figuren 3 bis 5 dargestellte Verformung eines Turms gemäß dem Stand der Technik unterscheidet sich deutlich von den Verformung des Turms gemäß dem Ausführungsbeispiel der Erfindung, die in den Figuren 6 bis 11 dargestellt ist. Der Grad der Verformung wird durch die Helligkeit der dargestellten Turmoberfläche angezeigt. D.h., daß der schwarze Bereich unverformt ist während die weißen Bereiche eine maximale Verformung anzeigen. Durch den Vergleich beispielsweise der Figuren 3 und 6 wird deutlich, daß das in dem Turm in Fig. 6 eingebrachte Schott dafür sorgt, daß die Verformung des Turms minimiert ist. Denn der schwarz eingefärbte Bereich des Turms in Fig. 6 ist deutlich größer als der schwarz eingefärbte Bereich des Turms in Fig. 3. In Fig. 5 und 10 ist das Turmende eines Turms gemäß dem Stand der Technik und eines erfindungsgemäßen Turms im Querschnitt dargestellt. Das Turmende in Fig. 10 bestitzt im wesentlichen einen kreisrunden Querschnitt, ist also kaum verformt. Das Turmende in Fig. 5 zeigt hingegen deutlich eine ovale Form.

## Patentansprüche

1. Turm einer Windenergieanlage zum Tragen eines Turmkopfes der Windenergieanlage, mit einem Flansch zur Aufnahme einer Verbindung, die geeignet ist, den Turmkopf der Windenergieanlage aufzunehmen,
**dadurch gekennzeichnet, daß** ein Schott oder ein Ringspant im Turminneren in einem Abstand von vorzugsweise 1,0 m bis 7,0 m vom Flansch vorgesehen ist, und das Schott oder der Ringspant im wesentlichen eine Scheibe bildet, die im Turminneren mit der Turmwandung verbunden ist und den Turm durchsetzt und daß das Schott oder der Ringspant beim Transport des Turmes gewährleistet, dass sich der Flansch nicht verformt.

2. Turm einer Windenergieanlage nach Anspruch 1,
**dadurch gekennzeichnet, daß** die Verbindung ein Drehlager ist.

3. Turm einer Windenergieanlage nach Anspruch 1 oder 2,
**dadurch gekennzeichnet, daß**
eine Öffnung im Zentrum des Schott oder Ringspant vorgesehen ist.

4. Turm einer Windenergienalage nach Anspruch 1, 2 oder 3,
**dadurch gekennzeichnet, daß**
der Ringspant oder das Schott in einem Abstand von 1,5 m bis 3,0 m, vorzugsweise 2,0 m, vom Flansch angeordnet ist.

5. Turm einer Windenergieanlage nach einem der vorstehenden Ansprüche,
**dadurch gekennzeichnet, daß**
weitere Ringspants oder Schotts im Inneren des Turms vorgesehen sind, die jeweils im wesentlichen eine Scheibe bilden, die im Turminneren mit der Turmwandung verbunden ist und den Turm durchsetzt.

6. Windenergieanlage mit einem Turm nach einem der Ansprüche 1 bis 5.

## Claims

1. Tower for a wind energy installation for supporting a tower head of the wind energy installation, having a flange for forming a connection, which is suitable for holding the tower head of the wind energy installation,
**characterized in that** a bulkhead or a annular frame in the tower interior is provided at a distance of preferably 1.0 m to 7.0 m from the flange, and the bulkhead or the annular frame essentially forms a disc which is connected in the tower interior to the tower wall and passes through the tower, and **in that** the bulkhead or the annular frame ensures that the flange is not deformed during transportation of the tower.

2. Tower for a wind energy installation according to Claim 1,
**characterized in that** the connection is a rotating bearing.

3. Tower for a wind energy installation according to Claim 1 or 2,
**characterized in that**
an opening is provided in the centre of the bulkhead or annular frame.

4. Tower for a wind energy installation according to Claim 1, 2 or 3,
**characterized in that**
the annular frame or the bulkhead is arranged at a distance of 1.5 m to 3.0 m, preferably 2.0 m, from the flange.

5. Tower for a wind energy installation according to one of the preceding claims,
**characterized in that**
further annular frames or bulkheads are provided in the interior of the tower and each essentially form a disc, which is connected to the tower wall in the tower interior and passes through the tower.

6. Wind energy installation having a tower according to one of Claims 1 to 5.

## Revendications

1. Tour d'une éolienne destinée à supporter une section supérieure de la tour de l'éolienne, avec une bride destinée à recevoir un assemblage, lequel assemblage convient pour recevoir la section supérieure de la tour de l'éolienne, **caractérisée en ce qu'**une cloison étanche ou un anneau de renforcement est prévu(e) à l'intérieur de la tour à une distance de préférence de 1,0 m à 7,0 m par rapport à la bride, et la cloison étanche ou l'anneau de renforcement formant sensiblement un disque, qui est relié à l'intérieur de la tour à la paroi de la tour et traverse la tour et **en ce que** la cloison étanche ou l'anneau de renforcement garantit, à l'occasion du transport de la tour, que la bride ne se déforme pas.

2. Tour d'une éolienne selon la revendication 1, **caractérisée en ce que** l'assemblage est un palier pivotant.

3. Tour d'une éolienne selon la revendication 1 ou 2, **caractérisée en ce que** une ouverture est prévue au centre de la cloison étanche ou de l'anneau de renforcement.

4. Tour d'une éolienne selon la revendication 1, 2 ou 3, **caractérisée en ce que** l'anneau de renforcement ou la cloison étanche est disposée à une distance de 1,5 m à 3,0 m, de préférence à 2,0 m, par rapport à la bride.

5. Tour d'une éolienne selon l'une des revendications précédentes, **caractérisée en ce que** d'autres anneaux de renforcement ou cloisons étanches sont prévu(e)s à l'intérieur de la tour, qui forment respectivement sensiblement un disque, qui est relié à l'intérieur de la tour à la paroi de la tour et traverse la tour.

6. Eolienne comprenant une tour selon l'une des revendications 1 à 5.
